(19) Europäisches Patentamt / European Patent Office / Office européen des brevets

(11) **EP 2 782 706 B1**

(12) **EUROPÄISCHE PATENTSCHRIFT**

(45) Veröffentlichungstag und Bekanntmachung des Hinweises auf die Patenterteilung:
**10.01.2018   Patentblatt 2018/02**

(21) Anmeldenummer: **12794872.7**

(22) Anmeldetag: **23.11.2012**

(51) Int Cl.:
*B23K 31/02* (2006.01)          *B23K 37/00* (2006.01)
*F01D 5/00* (2006.01)          *B23P 6/00* (2006.01)
*B23P 9/02* (2006.01)

(86) Internationale Anmeldenummer:
**PCT/EP2012/004850**

(87) Internationale Veröffentlichungsnummer:
**WO 2013/075835 (30.05.2013 Gazette 2013/22)**

(54) **VERFAHREN ZUM AUFTRAGSSCHWEISSEN**

BUILD-UP WELDING METHOD

PROCÉDÉ DE SOUDAGE PAR METAL D'APPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011   DE 102011087121**

(43) Veröffentlichungstag der Anmeldung:
**01.10.2014   Patentblatt 2014/40**

(73) Patentinhaber: **Lufthansa Technik AG**
**22335 Hamburg (DE)**

(72) Erfinder:
• **CZERNER, Stefan**
**22767 Hamburg (DE)**
• **GARTNER, Thomas**
**22087 Hamburg (DE)**
• **WANZEK, Horst**
**22453 Hamburg (DE)**

(74) Vertreter: **Müller Verweyen**
**Patentanwälte**
**Friedensallee 290**
**22763 Hamburg (DE)**

(56) Entgegenhaltungen:
**US-A- 2 299 747          US-A1- 2003 094 259**
**US-A1- 2005 173 380**

EP 2 782 706 B1

**Beschreibung**

Die Erfindung betrifft ein Verfahren zum Auftragsschweißen, wobei mindestens zwei Schweißlagen auf ein Bauteil aufgebracht werden.

Gasturbinenbauteile, insbesondere Bauteile aus Flugzeugtriebwerken, verschleißen im Betrieb. Zur Reparatur und Herstellung sind Verfahren zum Auftragsschweißen von Gasturbinenbauteilen beispielsweise aus den Druckschriften DE 10 2009 004 661 A1 oder DE 39 42 051 B4 bekannt.

Ein Problem von Auftragsschweißungen sind induzierte (Zug-) Eigenspannungen, die durch das Aufschmelzen und anschließende Abkühlen der Schmelze im Bauteil bzw. in aufgebrachten Schweißlagen erzeugt werden. Diese führen zu verschlechterten Materialeigenschaften, beispielsweise sind die erreichbaren Dehnungswerte in der Regel gering. Auch kann das Mikrogefüge von Bauteilen durch Auftragsschweißungen vergröbert und so die Materialeigenschaften verschlechtert werden.

Aus diesem Grund können manche Auftragsschweißreparaturen beispielsweise nur in bestimmten Bauteilbereichen angewendet werden, in denen keine großen Anforderungen an die Materialeigenschaften bestehen bzw. in denen eine Verschlechterung der Bauteileigenschaften als unkritisch einzustufen ist.

Aus den Druckschriften US 2003/0094259 A1 und US 2,299,747 A, die den Oberbegriff des Anspruchs 1 offenbart, sind ferner Verfahren zum Auftragsschweißen bekannt, bei denen mindestens zwei Schweißlagen aufgebracht werden, wobei die erste Schweißlage jeweils vor dem Aufbringen der zweiten Schweißlage durch einen Umformprozess zumindest zum Teil plastisch verformt wird.

Der Erfindung liegt demnach die Aufgabe zu Grunde, ein Verfahren zum Auftragsschweißen bereitzustellen, welches eine Verbesserung der mechanischen und/oder geometrischen Qualität eines auftragsgeschweißten Bauteils schafft.

Zur Lösung der Aufgabe wird erfindungsgemäß ein Verfahren zum Auftragsschweißen, wobei mindestens zwei Schweißlagen auf ein Bauteil aufgebracht werden, vorgeschlagen, wobei die erste Schweißlage vor dem Aufbringen der zweiten Schweißlage durch einen Umformprozess zumindest zum Teil plastisch verformt wird, wobei der Umformprozess durch zwei Verformungsmittel, die beidseitig gleichzeitig und mit gleicher Kraft auf die erste Schweißlage einwirken, erfolgt, wobei die erste Schweißlage von einer ersten auf eine zweite Breite mit einer gleichzeitigen Schichtdickenzunahme verformt wird.

Der Umformprozess erfolgt bevorzugt durch ein oder mehrere Verformungsmittel wie Hämmer, Stempel oder vorzugsweise Walzen. Die Verformungsmittel dienen dazu, durch Krafteinwirkung eine plastische Verformung der erkaltenden Schweißlage herbeizuführen. Dabei ist es bevorzugt, wenn der Umformprozess durch zwei Verformungsmittel erfolgt, die beidseitig an der ersten Schweißlage angeordnet sind. Durch beidseitig angeordnete Verformungsmittel, die vorzugsweise gleichzeitig und mit gleicher Kraft auf die erste Schweißlage einwirken, kann die Verformung gleichförmig und homogen erfolgen, ohne das restliche Werkstück mechanisch zu belasten, was insbesondere bei Bauteilen aus dem Flugbetrieb wichtig ist, um sicher zu stellen, dass andere Bauteilbereiche als die Schweißzone mechanisch nicht geschädigt werden. Auch ist es möglich und bevorzugt, die Verformungsmittel gleichzeitig zur Führung bzw. zur Bewegung des Bauteils einzusetzen. Bei beidseitigen Walzen oder Rollen ist es beispielsweise möglich, durch eine Rotation beider Verformungsmittel das Bauteil aufgrund der Reibung zwischen Bauteil und Verformungsmittel zwischen den Verformungsmitteln hindurch zu bewegen. Dabei wird die aufgebrachte Schweißlage verformt und nach erfolgter Schweißung kann das Bauteil durch die Rollen zurückbewegt werden.

Durch die beidseitig angeordneten Verformungsmittel können die auf jeder Seite eingeleiteten Kräfte direkt auf der jeweiligen Gegenseite aufgefangen werden. Zudem ist diese Lösung preiswert und konstruktiv gut umsetzbar. Die Umformdehnung ε, auch Umformgrad oder Verformungsgrad genannt, wird hierbei definiert als $\varepsilon = \dfrac{\Delta x}{x_0}$ , wobei $\Delta x$ die Breitenabnahme der Schweißnaht und x0 die Ausgangsbreite der Schweißnaht bezeichnet. Der Quotient wird im Weiteren als Vorzeichenloser Prozentwert genannt.

Bei dem Bauteil kann es sich um ein unbearbeitetes Bauteil handeln oder um ein bereits durch Auftragsschweißen aufgearbeitetes Bauteil. Dies bedeutet, dass sich das Verfahren sowohl für bereits mit Schweißlagen versehene Bauteile eignet, als auch für vollkommen unbearbeitete Bauteile. Aufgeschweißte bzw. auftragsgeschweißte Schweißlagen sind demnach Teil des Bauteils und werden von dem Bauteilbegriff mit umfasst. Bereits mit Schweißlagen aufgearbeitete Bauteile können immer weiter - Schweißlage für Schweißlage - durch das erfindungsgemäße Verfahren aufgearbeitet werden. Vor jeder weiteren Schweißlage erfolgt vorzugsweise eine erfindungsgemäße Verformung der letzten Schweißlage.

Die Umformung erfolgt bevorzugt direkt im Anschluss an das Auftragsschweißen, bevor das Schweißgut vollständig abgekühlt ist. Vorzugsweise wird die gesamte Schweißnaht umgeformt, jedoch können je nach Möglichkeit auch nur Teilbereiche verformt werden, so dass zumindest in diesen Teilbereichen die im Folgenden beschriebenen Vorteile auftreten.

Die Umformung führt zur Kompensation, vorzugsweise auch zur Überkompensation, der durch das Schweißen induzierten Zugeigenspannungen im Bauteil. Dazu ist es vorteilhaft, wenn die Umformungsrichtung so gewählt ist, dass die durch das Auftragsschweißen induzierten Eigenspannungen in der ersten Schweißlage verringert werden.

Die Umformungsrichtung ist bevorzugt so gewählt, dass das Material entlang der Richtung der durch das Schweißen vorhandenen Zugeigenspannungen verformt wird, so dass die Spannungen reduziert oder vollständig abgebaut werden können.

Vorzugsweise ist die durch das Auftragsschweißen der zweiten Schweißlage eingebrachte thermische Energie so bemessen, dass die darunter liegende verformte erste Schweißlage zumindest zum Teil in nicht aufgeschmolzenen Bereichen rekristallisiert. Ein derart ausgestaltetes Verfahren nutzt den bekannten Effekt, dass verformtes Material bzw. Mikrogefüge ab einer bestimmten Temperatur rekristallisiert. Eingesetzt wird dieser Effekt üblicherweise bei einem Rekristallisationsglühen, welches in der Regel in großen Öfen erfolgt.

Durch das beschriebene Auftragsschweißverfahren kann dieser Effekt der Rekristallisation jedoch ohne Einsatz eines Ofens erfolgen, die benötigte thermische Energie zur Rekristallisation einer Schweißlage stammt aus der Auftragsschweißung der nächsten Schweißlage. Bei Nutzung der beschriebenen bevorzugten Parameter kann das applizierte Material so Lage für Lage im Wesentlichen automatisch wärmebehandelt und rekristallisiert werden.

Das zugrundeliegende Wirkprinzip ist somit die Kombination von Schweißen und Verformung und nachfolgender Wärmebehandlung, die vorzugsweise durch die Schweißwärme der nächsten Schweißlage erfolgt.

Durch das Schweißen der zweiten Lage auf die plastisch verformte darunterliegende erste Schweißlage kann zudem durch Rekristallisation dieses Bereichs ein stängeliges Wachstum der Körner im Mikrogefüge des Bauteils verhindert werden. Dies ist insbesondere für Titanlegierungen vorteilhaft, da bei Titanlegierungen vermehrt die Gefahr besteht, dass die Körner senkrecht zur Hauptbelastungsrichtung in einem typischen Lastfall für eine Gasturbinenschaufel, insbesondere im Bereich der Kanten, über mehrere Schweißlagen zu einem grobkörnigen Gefüge wachsen.

Die Korngrenzen zwischen den Körnern können Rissquellen darstellen, die zum vorzeitigen Versagen der geschweißten Bauteile führen können. Insbesondere, wenn im Bereich von hoch belasteten Bereichen (beispielsweise in so genannten "Hot Spots", die durch (Eigen-)Schwingung induzierte Spannungen ausgebildet werden) geschweißt wird, kann eine erhöhte Rissgefahr bestehen.

Da durch Rekristallisation ein stängeliges Wachstum der Körner im Mikrogefüge verhindert werden kann, wirkt sich das Verfahren somit besonders positiv auf die mechanischen Eigenschaften des Werkstoffs aus, insbesondere da die Körner dann nicht mehr quer zur Beanspruchungsrichtung ausgerichtet sind.

Das Vorgehen gezielt Lage für Lage den Werkstoff zu rekristallisieren ist im Vergleich zum Ofenprozess neu und führt zu verbesserten Eigenschaften des Verbunds aus Schweißnaht und Werkstück in Bezug auf die geometrische Qualität der Schweißnaht, sowie des reduzierten Werkstückverzugs und der verbesserten mechanischen Eigenschaften, wie zum Beispiel eine Erhöhung der Bruchdehnungswerte der Schweißnaht. Des Weiteren können Vorrichtungen zur Fixierungen im Ofen, sowie Vorrichtungen zum Richten im Ofen eingespart werden. Darüber hinaus können die notwendigen Temperaturen für die Rekristallisation im Ofen beispielsweise bei Schmiedebauteilen nicht eingesetzt werden, da durch die Ofen-Temperatureinwirkung auf das gesamte Bauteil die Schmiedestruktur des Bauteils in dessen gesamten Volumen verändern würde, was in der Regel nicht erwünscht, bzw. mit Bezug auf Bauteile aus dem Flugbetrieb unzulässig ist.

Vorzugsweise wird durch die Rekristallisation ein im Vergleich zu vorher feinkörniges Mikrogefüge gebildet. Dies erfolgt wie beschrieben bevorzugt Lage für Lage. Feinkörnige Gefüge bzw. Bauteile mit feinkörnigem Mikrogefüge sind für die meisten Verwendungszwecke vorteilhaft und weisen insbesondere bei Einsatztemperaturen, die nicht nahe des Schmelzpunkts liegen, verbesserte Materialeigenschaften als grobkörnige Gefüge auf.

Durch das feinkörnige Gefüge werden die mechanischen Eigenschaften, insbesondere Zugfestigkeit und Dauerschwingfestigkeit, verbessert. Eine Härtesteigerung kann hierbei auftreten, ist aber im Sinne einer Panzerung nicht Ziel der Erfindung. Es ist keine Erzeugung von Einkristallen angestrebt bzw. vorgesehen.

Vorzugsweise liegt die Temperatur der ersten Schweißlage während des Umformprozesses in einem Bereich zwischen 20 und 1000°C, vorzugsweise 500 und 900°C, weiter bevorzugt 600 bis 800°C. Wie bereits beschrieben, erfolgt das Umformen bevorzugt unmittelbar anschließend an den Schweißprozess, so dass die erstarrte Materialschmelze bevorzugt noch nicht vollständig abgekühlt ist. Bei erhöhten Temperaturbereichen sind Werkstoffe gut plastisch verformbar und die induzierten Eigenspannungen sind noch vergleichsweise geringer. Die Höhe der Eigenspannung nimmt üblicherweise zu, wenn der Werkstoff abkühlt, "schrumpft" und sich dabei gemäß seinem thermischen Ausdehnungskoeffizienten beim Abkühlen zusammenzieht.

Die beim Abkühlen bzw. Erstarren der Schmelze auftretenden Zugeigenspannungen können durch die durch die Verformung eingebrachten Druckeigenspannungen kompensiert werden. Dadurch wird die Formhaltigkeit bzw. Verzugssicherheit des zu reparierenden Bauteils erhöht, welches insbesondere für Bauteile aus dem Gasturbinenbereich vorteilhaft ist, da diese oft dünnwandig und damit besonders verzuggefährdet sind.

Vorzugsweise werden beim Umformprozess Umformdehnungen bzw. Umformgrade in einem Bereich zwischen 1 bis 99 %, vorzugsweise 1 bis 50 %, erzielt. Beim Walzen von Blechen beschreibt der Umformgrad die Dickenabnahme bei jedem Walzvorgang. Beim Schmieden von Brammen oder Ziehen von Drähten ist der Umformgrad durch die Querschnittsabnahme definiert.

Derartige Umformgrade führen zur verstärkten Ausbildung von Versetzungen im Mikrogefüge des umgeformten Materials. Im Spezialfall von Titanbasiswerkstoffen erfolgt zusätzlich die metallographische Ausbildung von Zwillingen, einer besonderen Mikrogefügestruktur. Insbesondere können die vorzugsweise eingebrachten Druckeigenspannungen eine Zwillingsbildung begünstigen. Auch die bevorzugte beidseitige Verformung kann die Ausbildung von Zwillingen in der Gefügestruktur von Werkstoffen, insbesondere in Titanwerkstoffen, fördern. Die Ausbildung von Zwillingen ist vorteilhaft, da sie bei einer Wärmebehandlung eine Rekristallisation des Gefüges erleichtern und fördern. Weiterhin führt eine Wärmebehandlung zu einem Nivellieren der Eigenspannungen mit Zugeigenspannungen aus dem Schweißprozess.

Je stärker die Umformung - und damit die Anzahl der Versetzungen im Gefüge - ist, desto größer ist (aus energetischen Gründen) das Bestreben des Gefüges, bei Temperaturerhöhung zu rekristallisieren und ein feinkörniges Gefüge auszubilden. Jedoch sollte die Schweißlage nicht beliebig stark umgeformt werden, sondern vorzugsweise werden nur die Eigenspannungen kompensiert bzw. überkompensiert und die Schweißlage wird so verformt, dass die Schweißlage der gewünschten Zielgeometrie entspricht. Die Zielgeometrie zeichnet sich dadurch aus, dass sie nicht mehr nachbearbeitet werden muss bzw. dadurch, dass nur noch minimale Nacharbeit erforderlich ist, bevor das Bauteil für seine gewünschte Verwendung einsatzbereit ist.

Das Verfahren ist für alle Gasturbinenbauteile geeignet, beispielsweise für die Bauteile von stationären Gasturbinen, als auch für die Bauteile von Flugzeugtriebwerken. Vorzugsweise ist das Bauteil ein Gasturbinenbauteil, vorzugsweise eine Kompressorschaufel, aus einem Titanwerkstoff. Titanwerkstoffe umfassen alle Legierungen, die das Element Titan enthalten, beispielsweise die vielfach eingesetzte Titanlegierung TiA16V4.

Vorzugsweise wird das Verfahren mehrfach hintereinander an demselben Bauteil durchgeführt, so dass insgesamt mindestens zwei, vorzugsweise mindestens drei, übereinander liegende Schweißlagen jeweils vor dem Aufbringen der nächsten Schweißlage durch einen Umformprozess zumindest zum Teil plastisch verformt werden.

Die plastische Verformung nach dem Schweißen jeder Lage bzw. jeder Schweißraupe ermöglicht es zudem, die gewünschte Endkontur vergleichsweise gut einzustellen.

Eine mehrfache Durchführung des Verfahrens verstärkt die Rekristallisation der unteren Schichten und führt insgesamt zu einem Bauteil mit vergleichsweise wenig (Zug-)Eigenspannungen, welches in Gasturbinen demnach besser (und breiter) einsetzbar ist als normal auftragsgeschweißte Bauteile. Es können Reparaturen an Bauteilbereichen durchgeführt werden, die üblicherweise (luftfahrtrechtlich-/sicherheits-bedingt) nicht auftragsgeschweißt werden könnten oder die mit aufwendigen Nach- und/oder Wärmebehandlungen verbunden wären.

Vorzugsweise werden durch das Verfahren gleiche bzw. artgleiche Werkstoffe auf das Grundmaterial des Bauteils bzw. auf die bereits aufgebrachten Schweißlagen aufgeschweißt. Unter gleichen bzw. artgleichen Werkstoffen sind solche zu verstehen, die in ihrer Zusammensetzung weitestgehend anhand der verwendeten Legierungsbestandteile und deren Anteilen am Werkstoff übereinstimmen. Legierungsabweichungen können naturgemäß auftreten, ohne dass von nicht artgleichen Werkstoffen auszugehen ist. In einer weiteren bevorzugten Ausführungsform sind die Werkstoffe in ihrer Zusammensetzung vollständig identisch.

Vorzugsweise werden artgleiche Werkstoffe auf Titanbasis aufgeschweißt. Als Gegenbeispiel, bei dem nicht artgleiche Werkstoffe eingesetzt werden, ist beispielsweise das Aufbringen einer Nickelpanzerung auf einer Stahlwelle anzuführen.

Die Erfindung wird im Folgenden anhand bevorzugter Ausführungsformen unter Bezugnahme auf die beigefügten Figuren erläutert. Dabei zeigt:

Fig. 1  eine schematische Darstellung eines Auftragsschweißverfahrens in der Seitenansicht;

Fig. 2  eine schematische Darstellung des Auftragsschweißverfahrens aus Figur 1 in der Vorderansicht;

Fig. 3  eine schematische Darstellung eines Auftragsschweißverfahrens aus Figur 1 in der Draufsicht.

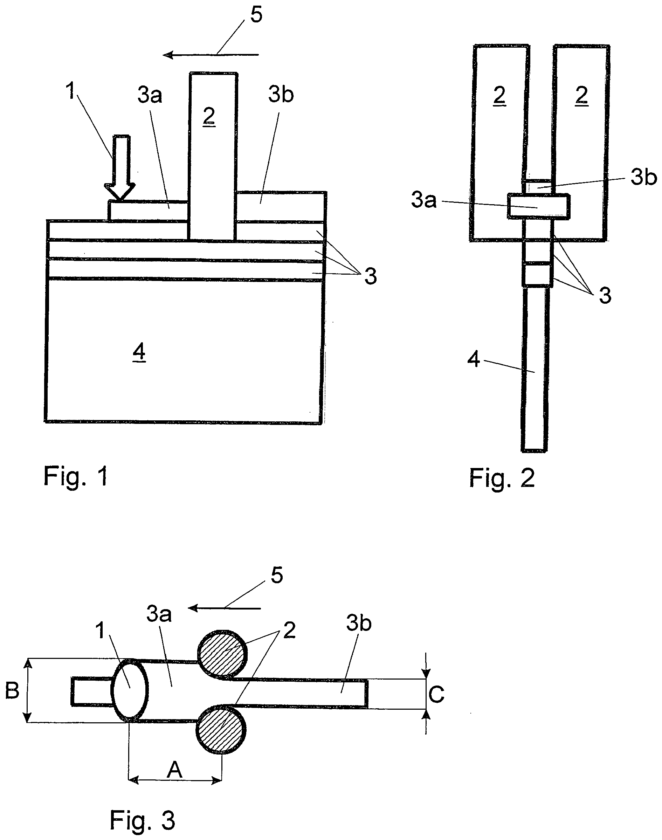

In der Figur 1 ist in einer Seitenansicht ein Teilbereich eines Bauteils 4 dargestellt, welches durch einen Schweißvorgang 1 im Auftragsschweißverfahren mit mehreren Schweißlagen 3 versehen wird. Es kann sich dabei beispielsweise um ein Kompressorbauteil eines Flugzeugtriebwerks handeln, welches zu Reparaturzwecken auftragsgeschweißt wird. Zur Verdeutlichung zeigt Figur 2 eine Vorderansicht und die Figur 3 eine Draufsicht des Auftragsschweißens aus Figur 1.

Der Schweißvorgang 1 umfasst eine Energiezufuhr und einen Schweißzusatzwerkstoff, welcher auf das Bauteil 4 bzw. auf die oberste Schweißlage 3 aufgebracht und anschließend mit dem Bauteil 4 bzw. mit der Schweißlage 3 verschweißt wird. Zusätzlich kann vorher auf dem Bauteil 4 bzw. einer Schweißlage 3 auch Zusatzwerkstoff bereitgestellt werden.

Zunächst wird durch den Schweißvorgang 1 eine unverformte Schweißlage 3a erzeugt. Diese wird im Anschluss durch die mechanische Einwirkung von Verformungsmitteln 2, die hier als Rollen oder vorzugsweise als Walzen ausgeführt sind, plastisch verformt. Dazu wird das Bauteil 4 zwischen den Walzen hindurchgeführt. Vorzugsweise rotieren die Walzen und drücken das Bauteil 4 zwischen ihnen hindurch. Die Geometrie des Verformungsmittels 2 ist so gewählt, dass dabei nur die unverformte Schweißlage 3a verformt wird und das Bauteil 4 keine weitere Verformung erfährt. Das Bauteil 4 - und die bereits verformten Schweißlagen 3 - haben eine Dicke C, wohingegen die unverformte Schweißlage 3a eine größere Breite B aufweist. Durch die Verformung wird die unverformte Schweißlage 3a von einer Breite B auf eine Breite C umgeformt.

Es kann dabei auch vorteilhaft sein, nicht das Bauteil 4 durch die Walzen zu bewegen, sondern die Walzen an dem Bauteil 4 entlang zu bewegen. In jedem Fall ist die Relativbewegung 5 des Verformungsmittels 2 in Richtung der unverformten Schweißlage 3a gerichtet.

Im Einzelfall kann die Rolleneinheit mit sehr großem Abstand A bzw. separat eingesetzt werden. Vorzugsweise wird der Abstand A jedoch so weit reduziert, dass die Temperatur während der Umformung im bevorzugten Bereich vergleichsweise reduzierter Umformkräfte liegt.

Durch den Verformungsprozess wird die unverformte Schweißlage 3a mit Verformungsgraden in einem Bereich zwischen 1 und 200 % und bei einer Temperatur in einem Bereich zwischen 20 und 1000°C zu einer verformten Schweißlage 3 plastisch verformt. Dazu wird vorzugsweise der Abstand A vom flüssigen Schweißbad (bzw. Schweißvorgang 1) zur Mittelachse der Verformungsmittel 2 so gewählt, dass die Temperatur der unverformten Schweißlage 3a in dem beschriebenen bevorzugten Bereich von 500 bis 900°C liegt. In diesem Temperaturbereich können hohe Verformungsgrade zwischen 1 und 200 % rissfrei erzielt werden.

Durch die Umformungen werden die im Bauteil 4 vorhandenen (Zug-)Eigenspannungen kompensiert und zusätzlich im Materialgefüge Versetzungen erzeugt.

Wenn anschließend auf die verformte Schweißlage 3b eine weitere Schweißlage 3 auftragsgeschweißt wird, kann, wenn die Temperatur der verformten Schweißlage 3b bzw. die eingebrachte thermische Energie durch das Auftragsschweißen der nächsten Schweißlage 3 entsprechend gezielt eingestellt werden, das verformte Material der verformten Schweißlage 3b rekristallisieren und ein vorteilhaftes feinkörniges Gefüge ausbilden.

Rekristallisation hat auch den Vorteil, dass die sonst bedingt durch den Temperaturgradienten bei der Abkühlung in Erstarrungsrichtung ausgerichteten Kristalle, zufällig orientieren und damit makroskopisch isotrope Festigkeitseigenschaften annehmen.

Zusätzlich wird durch das Verfahren der Schweißüberhang reduziert und normalerweise eingesetzte Verfahren zur Nacharbeit durch die bessere Konturnähe im Aufwand reduziert.

Bezugszeichenliste:

| 1 | Schweißvorgang |
|---|---|
| 2 | Verformungsmittel |
| 3 | Schweißlage |
| 3a | Unverformte Schweißlage |
| 3b | Verformte Schweißlage |
| 4 | Bauteil |
| 5 | Verformungsmittel |

**Patentansprüche**

1. Verfahren zum Auftragsschweißen, wobei mindestens zwei Schweißlagen (3) auf ein Bauteil (4) aufgebracht werden, wobei die erste Schweißlage (3) vor dem Aufbringen der zweiten Schweißlage (3) durch einen Umformprozess zumindest zum Teil plastisch verformt wird, **dadurch gekennzeichnet, dass** der Umformprozess durch zwei Verformungsmittel (2), die beidseitig gleichzeitig und mit gleicher Kraft auf die erste Schweißlage (3) einwirken, erfolgt, wobei die erste Schweißlage (3) von einer ersten auf eine zweite Breite (B, C) mit einer gleichzeitigen Schichtdickenzunahme verformt wird.

2. Verfahren nach Anspruch 1, **dadurch gekennzeichnet, dass** die Umformungsrichtung so gewählt ist, dass die durch das Auftragsschweißen induzierten Eigenspannungen in der ersten Schweißlage (3) verringert werden.

3. Verfahren nach Anspruch 1 oder 2, **dadurch gekennzeichnet, dass** durch die Rekristallisation ein im Vergleich zu vorher feinkörniges Mikrogefüge gebildet wird.

4. Verfahren nach einem der vorangegangenen Ansprüche, **dadurch gekennzeichnet, dass** die Temperatur der ersten Schweißlage (3) während des Umformprozesses in einem Bereich zwischen 20 und 1000°C, vorzugsweise 500 und 900°C, weiter bevorzugt 600 bis 800°C, liegt.

5. Verfahren nach einem der vorangegangenen Ansprüche, **dadurch gekennzeichnet, dass** der Umformprozess durch ein oder mehrere Verformungsmittel (2), vorzugsweise Walzen, erfolgt.

6. Verfahren nach einem der vorangegangenen Ansprüche, **dadurch gekennzeichnet, dass** beim Umformprozess Umformgrade in einem Bereich zwischen 1 bis 99 %, vorzugsweise 1 bis 50 %, erzielt werden.

7. Verfahren nach einem der vorangegangenen Ansprüche, **dadurch gekennzeichnet, dass** das Bauteil (4) ein Gasturbinenbauteil, vorzugsweise eine Kompressorschaufel, aus einem Titanwerkstoff ist.

**8.** Verfahren nach einem der vorangegangenen Ansprüche, **dadurch gekennzeichnet, dass** das Verfahren mehrfach hintereinander an demselben Bauteil (4) durchgeführt wird, so dass insgesamt mindestens zwei, vorzugsweise mindestens drei, übereinander liegende Schweißlagen (3) jeweils vor dem Aufbringen der nächsten Schweißlage (3) durch einen Umformprozess zumindest zum Teil plastisch verformt werden.

**Claims**

**1.** Build-up welding method, wherein at least two weld layers (3) are applied to a component (4), wherein the first weld layer (3) is deformed plastically at least partially by means of a plastic deformation process prior to applying the second weld layer (3), **characterized in that** the plastic deformation process is carried out by two deformation means (2) acting onto the first weld layer (3) simultaneously from both sides and with equal force, wherein the first weld layer (3) is deformed from a first to a second width (B, C) with the layer thickness at the same time increasing.

**2.** Method according to claim 1, **characterized in that** the deformation direction is chosen such that the internal stresses in the first weld layer (3) induced by the build-up welding are reduced.

**3.** Method according to claim 1 or 2, **characterized in that** due to the recrystallization, as compared to before, a fine-grained microstructure is formed.

**4.** Method according to any one of the preceding claims, **characterized in that** the temperature of the first weld layer (3) during the plastic deformation process lies in a range between 20 and 1000°C, preferably 500 and 900°C, further preferably 600 to 800°C.

**5.** Method according to any one of the preceding claims, **characterized in that** the plastic deformation process is carried out by one or more deformation means (2), preferably rollers.

**6.** Method according to any one of the preceding claims, **characterized in that** during the plastic deformation process degrees of deformation in a range between 1 to 99 %, preferably 1 to 50 %, are realized.

**7.** Method according to any one of the preceding claims, **characterized in that** the component (4) is a gas turbine component, preferably a compressor blade, made of a titanium material.

**8.** Method according to any one of the preceding claims, **characterized in that** the method is carried out several times in a row on the same component (4) such that at least two, preferably at least three weld layers (3) in total on top of each other are deformed plastically at least partially by means of a plastic deformation process each time prior to applying the next weld layer (3).

**Revendications**

**1.** Procédé de soudage par superposition, dans lequel au moins deux couches de soudure (3) sont appliquées sur une pièce (4), la première couche de soudure (3) étant au moins en partie plastiquement déformé avant l'application de la deuxième couche de soudure (3) par un processus de déformation, **caractérisé en ce que** le processus de déformation s'effectue par deux moyens de déformation (2) agissant des deux côtés simultanément et en force égale sur la première couche de soudure (3), la première couche de soudure (3) étant déformée à partir d'une première à une deuxième largeur (B, C) avec un accroissement de l'épaisseur de couche simultané.

**2.** Procédé selon la revendication 1, **caractérisé en ce que** le sens de déformation est sélectionné de manière que les contraintes propres induites par le soudage par superposition sont diminuées dans la première couche de soudure (3).

**3.** Procédé selon la revendication 1 ou 2, **caractérisé en ce qu'**il se forme par la recristallisation une microstructure à grain fin par rapport à la précédente.

**4.** Procédé selon l'une des revendications précédentes, **caractérisé en ce que** la température de la première couche de soudure (3) pendant le processus de déformation se situe dans une plage entre 20 et 1000 °C, de préférence entre 500 et 900 °C, de manière encore préférée entre 600 à 800 °C.

**5.** Procédé selon l'une des revendications précédentes, **caractérisé en ce que** le processus de déformation s'effectue par un ou plusieurs moyens de déformation (2), de préférence des rouleaux.

**6.** Procédé selon l'une des revendications précédentes, **caractérisé en ce que** lors du processus de déformation, des degrés de déformation compris dans la plage entre 1 à 99 %, de préférence entre 1 à 50 %, sont atteints.

**7.** Procédé selon l'une des revendications précédentes, **caractérisé en ce que** la pièce (4) est une pièce de turbine à gaz, de préférence une aube de compresseur, d'une matière en titane.

**8.** Procédé selon l'une des revendications précédentes, **caractérisé en ce que** le procédé s'exécute plusieurs fois successivement sur la même pièce (4) de sorte qu'en tout au moins deux, de préférence au moins trois couches de soudure (3) superposées sont plastiquement déformées au minimum en partie, chaque fois avant l'application de la couche de soudure (3) suivante, par un processus de déformation.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009004661 A1
- DE 3942051 B4
- US 20030094259 A1
- US 2299747 A